# EUROPEAN PATENT APPLICATION

(11) **EP 2 398 208 A2**
(43) Date of publication of application: **21.12.2011**
(21) Application number: 11170417.7
(22) Date of filing: 17.06.2011
(51) Int. Cl.: H04L 29/06

(54) **Method for securing transmission data and security system for implementing the same**

(30) Priority: 21.06.2010 TW 099120088
(71) Applicant: Chou, Che-Yang, Taichung City (TW)
(72) Inventor: Chou, Che-Yang, Taichung City (TW)
(74) Representative: Burger, Markus

(57) **Abstract**

A method for securing transmission data is to be implemented by a security system (10, 20, 30) including first and second security modules (1, 2). The first security module (1) provides a first public key to the second security module (2). The second security module (2) encrypts a second public key and second verification data associated therewith using the first public key, and provides the encrypted second public key and the encrypted second verification data to the first security module (1) . The first security module (1) decrypts the encrypted second public key using a first private key, encrypts first verification data associated therewith using the second public key, and provides the encrypted first verification data to the second security module (2) . The first and second securitymodules (1, 2) verify each other using the encrypted second and first verification data, respectively. The security system (10, 20, 30) allows data transmission through the first and second security modules (1, 2) when verification is successfully completed.

## Description

The present invention relates to a method for securing transmission data, more particularly to a method for securing transmission data using asymmetric keys.

Current encryption algorithms using keys for data security are classified into two major types, i.e. , the symmetric key encryption algorithm and the asymmetric key encryption algorithm. Degrees of security and safety of these algorithms are not related to the algorithms, and depend on the security of the keys.

Regarding the symmetric key encryption algorithm, a same key is used for both encryption and decryption. Therefore, a data encryption end and a data decryption end both need to have this key. Well-known symmetric key encryption algorithms include Data Encryption Standard (DES) and various modifications thereof, International Data Encryption Algorithm (IDEA), etc..

Regarding the asymmetric key encryption algorithm, a pair of a public key and a private key are used for encryption and decryption, respectively, and it is difficult to derive the private key from the public key. Well-known asymmetric key encryption algorithms include RSA Algorithm (standing for Rivest, Shamis and Adleman who first publicly described this algorithm), Elliptic Curve Algorithm, etc..

With popularization of computers and networks, it is desired to have a relatively safer method for securing data based on the existing encryption algorithms.

Therefore, an object of the present invention is to provide a method for securing transmission data.

Accordingly, a method for securing transmission data of this invention is to be implemented by a security system that includes a first security module associated with first verification data and a second securitymodule associated with second verification data. The first security module includes a first public key and a first private key corresponding to the first public key. The second security module includes a second public key and a second private key corresponding to the second public key. The method comprises the steps of:
a) configuring the first security module to provide the first public key to the second security module;
b) configuring the second security module to encrypt the second public key using the first public key, and to provide the encrypted second public key to the first security module;
c) configuring the second security module to encrypt the second verification data associated therewith using the first public key received in step a) , and to provide the encrypted second verification data to the first security module;
d) configuring the first security module to decrypt the encrypted second public key received in step b) using the first private key, to thereby obtain the second public key;
e) configuring the first security module to encrypt the first verification data associated therewith using the second public key obtained in step d), and to provide the encrypted first verification data to the second security module;
f) configuring the first security module and the second security module to verify each other using the encrypted second verification data and the encrypted first verification data received in steps c) and e), respectively; and
g) configuring the security system to allow data transmission through the first security module and the second security module when verification is successfully completed in step f).

Another obj ect of the present invention is to provide a security system for securing transmission data.

According to another aspect, a security system for securing transmission data of this invention comprises a first security module associated with first verification data and a second security module associated with second verification data.

The first security module includes a first encryption/decryption unit, a first verification unit, and a first key-generating unit for generating an accessible first public key and a first private key corresponding to the first public key. The second security module is configured to obtain the first public key from the first security module, and includes a second encryption/decryption unit, a second verification unit, and a second key-generating unit for generating a second public key and a second private key corresponding to the second public key.

The second encryption/decryption unit is operable to encrypt the second public key and the second verification data using the first public key, and to provide the encrypted secondpublic key and the encrypted second verification data to the first security.module.

The first encryption/decryption unit is operable to decrypt the encrypted second public key and the encrypted second verification data using the first private key to thereby obtain the second public key and the second verification data, to encrypt the first verification data using the second public key thus obtained, and to provide the encrypted first verification data to the second security module. The first verification unit is operable to verify the second security module based upon the second verification data decrypted and obtained by the first encryption/decryption unit.

The second encryption/decryption unit is further operable to decrypt the encrypted first verification data using the second private key to obtain the first verification data. The second verification unit is operable to verify the first security module based upon the first verification data decrypted and obtained by the second encryption/decryption unit.

The security system is operable to allow data transmission through the first security module and the second security module when verification between the first security module and the second security module is successfully completed.

Other features and advantages of the present invention will become apparent in the following detailed description of the preferred embodiments with reference to the accompanying drawings, of which:
Figure 1 is a block diagram of a first preferred embodiment of a security system for securing transmission data according to this invention;
Figure 2 is a flow chart of a method for securing transmission data to be implemented by the security system of the first preferred embodiment;
Figure 3 is a flow chart illustrating a procedure for data transmission of the method implemented using the security system of the first preferred embodiment;
Figure 4 is a flow chart illustrating a login procedure of the method implemented using the security system of the first preferred embodiment;
Figure 5 is a block diagram of a second preferred embodiment of a security system for securing transmission data according to this invention;
Figure 6 is a block diagram of a third preferred embodiment of a security system for securing transmission data according to this invention; and
Figure 7 is a flow chart of a method for securing transmission data to be implemented by the security system of the third preferred embodiment.

Before the present invention is described in greater detail, it should be noted that like elements are denoted by the same reference numerals throughout the disclosure.

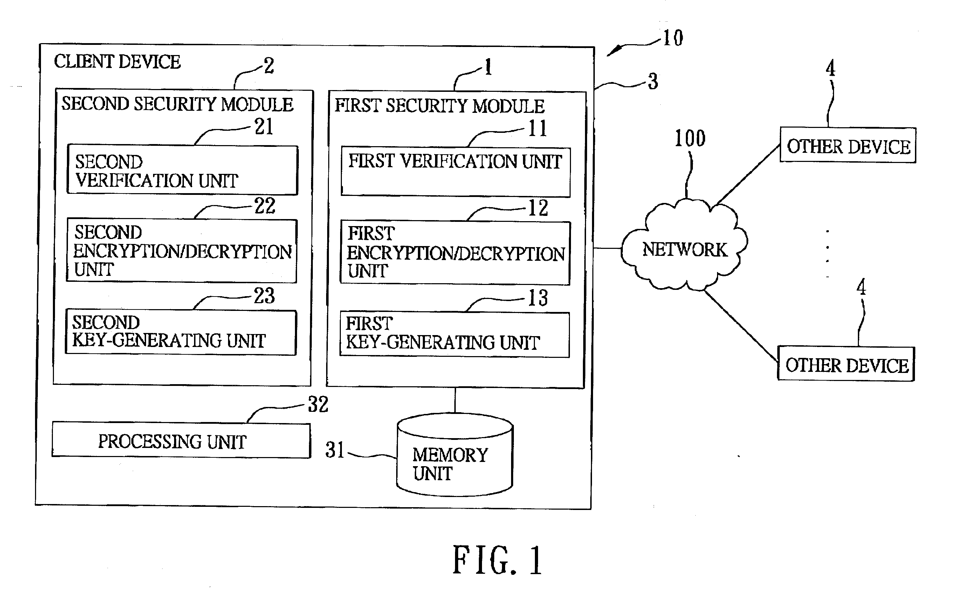

Referring to Figure 1, a first preferred embodiment of a security system 10 according to this invention includes a first security module 1 and a second security module 2. The first security module 1 is associated with first verification data, and includes a first verification unit 11, a first encryption/decryption unit 12, and a first key-generating unit 13. The second security module 2 is associated with second verification data, and includes a second verification unit 21, a second encryption/decryption unit 22, and a second key-generating unit 23.

In this embodiment, the first security module 1 and the second security module 2 are configured for integration within a client device 3, such as a personal computer, a notebook computer, a cell phone, or other similar electronic devices. The client device 3 has an operating system, a memory unit 31 (such as a hard disk, a flash memory, or any other types of storage devices), and a processing unit 32 (such as an application program, a chip, or a processor). The first securitymodule 1 is electrically connected to the memory unit 31, and the second security module 2 is operatively associated with the processing unit 32. Since the client device 3 and the memory unit 31 and the processing unit 32 thereof are well known to those skilled in the art and are not the features of this invention, further details thereof will be omitted herein for the sake of brevity.

In this embodiment, the first security module 1 can be implemented using hardware, such as a specified chip. As long as the data contained in the first securitymodule 1 and the data generated during operation of the components of the first security module 1 are not made public, these data are inaccessible to the operating system of the client device 3 and any other application programs installed in the operating system. Namely, the operating system and other application programs cannot monitor, access, and modify the non-public data in the first security module 1. The second security module 2, for example, is an application program stored in a hidden memory or a read-only/write-only memory of the memory unit 31 of the client device 3, and is configured to be implemented by the processing unit 32 of the client device 3.

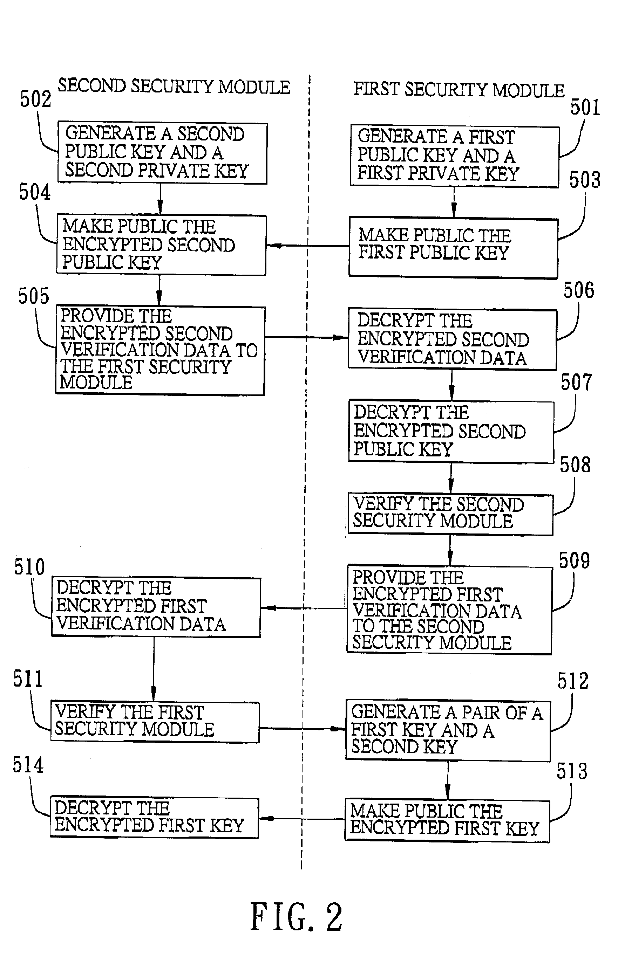

Referring to Figures 1 and 2, a method for securing transmission data to be implemented by the security system 10 of the first preferred embodiment includes the following steps.

In step 501, the first key-generating unit 13 of the first security module 1 is operable to generate an accessible first public key and a first private key corresponding to the first public key. In particular, the first public key and the first private key are generated using an existing asymmetric key encryption algorithm. Since the asymmetric key encryption algorithm is well known to those skilled in the art, further details thereof will be omitted herein for the sake of brevity.

Similarly, in step 502, the second key-generating unit 23 of the second security module 2 is operable to generate an accessible second public key and a second private key corresponding to the second public key. The second public key and the second private key are also generated using the asymmetric key encryption algorithm.

In step 503, the first security module 1 is operable to make public the first public key, that is to say, the operating system of the client device 3 and the application programs installed in the operating system are allowed to monitor, access, and modify the first public key. Even other devices 4 connected to the client device 3 through network 100 can monitor, access, and modify the first public key. Thus, the second security module 2 can access and obtain the first public key after step 503. On the other hand, since the first private key is not made public and is generated and used merely within the first security module 1, the operating system and the application programs cannot monitor, access, and modify the first private key.

In step 504, the second encryption/decryption unit 22 of the second security module 2 is operable to encrypt the second public key generated in step 502 using the first public key obtained from the first security module 1 in step 503, and then to make public the encrypted second public key. Thus, the encrypted second public key can be decrypted only using the first private key, that is to say, only the first security module 1 can decrypt the encrypted second public key.

In step 505, the second encryption/decryption unit 22 of the second security module 2 is operable to also encrypt the second verification data using the first public key, and then the second security module 2 is operable to provide the encrypted second verification data to the first security module 1. In particular, the second verification data is associated with the second security module 2 and the processing unit 32, and is provided to the first security module 1 for verifying the second security module 2 and the processing unit 32. In practice, the second verification unit 21 of the second security module 2 is configured to generate the second verification data according to a verification rule dynamically generated by the first verification unit 11 of the first security module 1.

The first encryption/decryption unit 12 of the first security module 1 is operable to decrypt the encrypted second verification data using the first private key in step 506, and to decrypt the encrypted second public key using the first private key in step 507 to thereby obtain the second public key.

In step 508, the first verification unit 11 of the first security module 1 is operable to verify the second security module 2 according to the second verification data decrypted in step 506. In practice, the first verification unit 11 is configured to implement a conventional verification mechanism to verify the second security module 2. Since the conventional verification mechanism is well known to those skilled in the art, details thereof will be omitted herein for the sake of brevity.

The flow goes to step 509 when the first security module 1 successfully completed the verification of the second security module 2 in step 508. Otherwise, the security system 10 is configured to deny data transmission through the first security module 1 and the second security module 2.

In step 509, the first encryption/decryption unit 12 of the first security module 1 is operable to encrypt the first verification data using the second public key obtained in step 507, and then the first security module 1 is operable to provide the encrypted first verification data to the second security module 2. In particular, the first verification data is associated with the first securitymodule 1, and is provided to the second security module 2 for verifying the first security module 1. In practice, the first verification unit 11 of the first security module 1 is configured to dynamically generate the first verification data. Thus, the first verification data is generated within the first security module 1 such that the first verification data is inaccessible to the operating system and the application programs of the client device 3. Namely, the operating system and the application programs cannot monitor, access, and modify the first verification data.

Tn step 510, the second encryption/decryption unit 22 of the second security module 2 is operable to decrypt the encrypted first verification data obtained in step 509 using the second private key. Then, in step 511, the second verification unit 21 of the second security module 2 is operable to verify the first security module 1 according to the first verification data decrypted in step 510. The second security module 2 is further configured to provide a result of verification to the first security module 1.

The flow goes to step 512 when the result of verification from the second security module 2 is successful, i.e., verification between the first and second security modules 1, 2 is successfully completed. Otherwise, the security system 10 is configured to deny data transmission through the first security module 1 and the second security module 2. For example, when the second security module 2 fails to verify the first security module 1, the processing unit 32 cooperatively associated with the second security module 2 is denied to access the memory unit 31 electrically connected to the first security module 1. Similarly, any one of the devices 4 connected to the client device 3 through the network 100 is authorized to access the memory unit 31 only after verification of said one of the devices 4 is successfully completed.

After the verification between the first and second security modules 1, 2 is successfully completed, the first key-generating unit 13 of the first security module 1 is operable to generate a pair of a first key and a second key in step 512. Each of the first and second keys is used for encrypting data and for decrypting encrypted data that is encrypted using the other one of the first and second keys. In practice, the first and second keys are generated also using the existing asymmetric key encryption algorithm. Then, in step 513, the first encryption/decryption unit 12 of the first security module 1 is operable to encrypt one of the first and second keys (for example, the first key in this embodiment) using the second public key obtained in step 507, and the first security module 1 is operable to make public the encrypted first key. In step 514, the second encryption/decryption unit 22 of the second security module 2 is operable to decrypt the encrypted first key using the second private key to thereby obtain the first key.

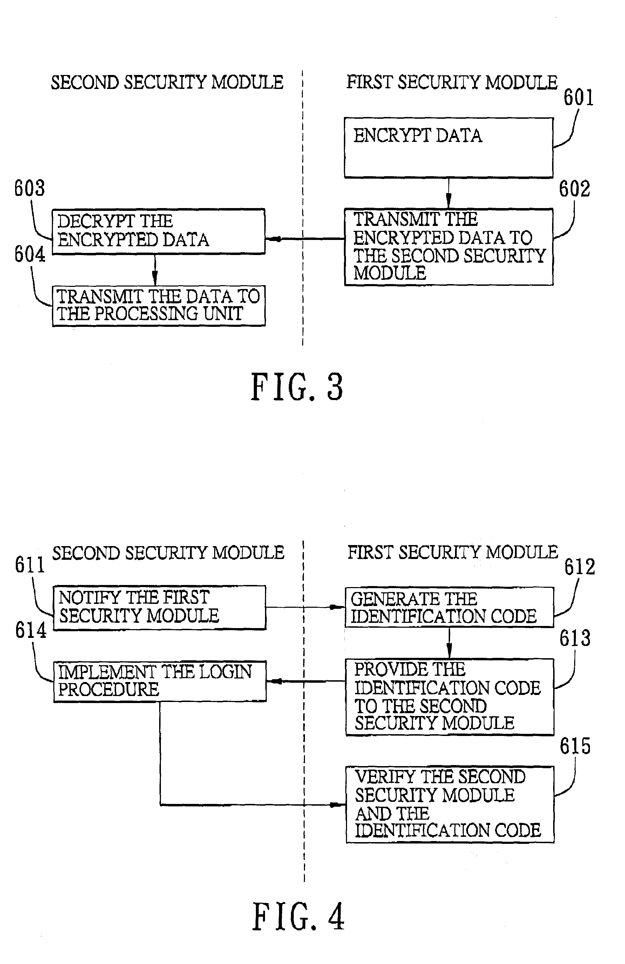

Referring to Figures 1 and 3, when the processing unit 32 requires access to data stored in the memory unit 31, the first Encryption/decryption unit 12 of the first security module 1 is operable to encrypt data that is to be transmitted using the second key in step 601. Subsequently, the first security module 1 is operable to transmit the encrypted data to the second security module 2 in step 602.

Then, in step 603, the second encryption/decryption unit 22 of the second security module 2 is operable to decrypt the encrypted data received in step 602 using the first key obtained in step 514. In step 604, the second security module 2 is operable to transmit the data decrypted in step 603 to the processing unit 32.

In addition, the method for securing transmission data may further include, prior to step 501, a login procedure for allowing the second security module 2 to gain access to the security system 10. Referring to Figures 1 and 4, the login procedure, for example, includes the following steps.

When the second security module 2 is installed (for example, installation of the application program of the second security module 2), the second security module 2 is operable to notify the first security module 2 to generate an identification code corresponding to the second security module 2 in step 611.

The first security module 1 is operable, in response to the notification from the second security module 2 in step 611, to generate the identification code in step 612, and to provide the identification code to the second security module 2 in step 613.

In step 614, the second security module 2 is operable to implement the login procedure using the identification code received in step 613. Then, the first security module 1 is operable to verify the second security module 2 and the identification code in step 615. Only after the login procedure is successfully completed will the security system 10 be operable to implement the subsequent steps of the method for securing transmission data.

In particular, when the first security module 1 determines that a number of attempts of unauthorized access to the memory unit 31 or a number of times of use of an incorrect identification code in the login procedure exceeds a predetermined number, the first security module 1 is operable to repeat steps 612 and 613 to generate and provide a new identification code to the second security module 2. Then, the second security module 2 may use the new identification code to implement the login procedure in step 614.

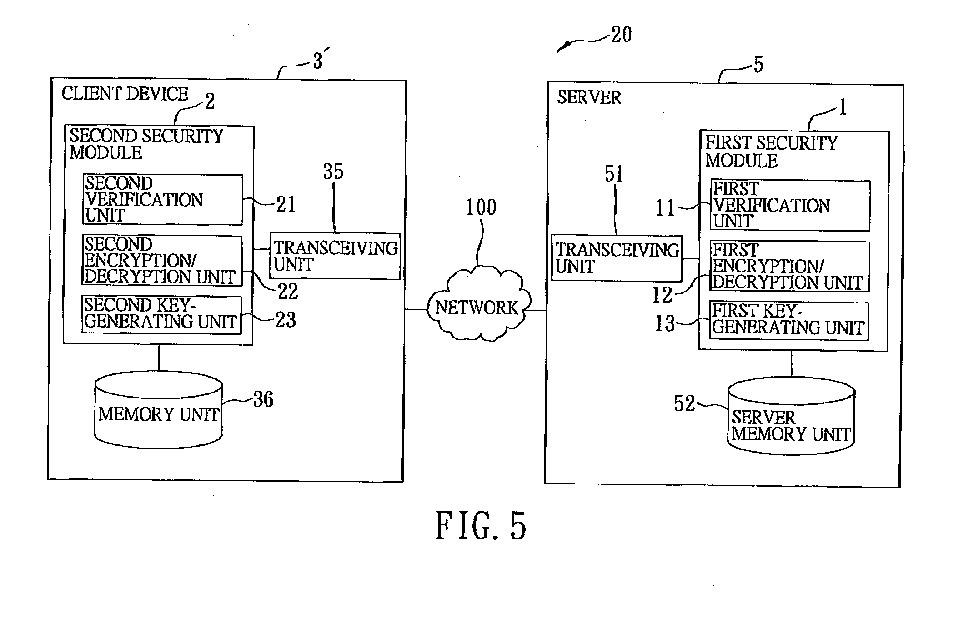

Referring to Figure 5, a second preferred embodiment of a security system 20 according to this invention includes a first security module 1 and a second security module 2 that are similar to those of the first preferred embodiment. The operations of the components of the first and second security modules 1, 2 are also similar to those in the first preferred embodiment. In this embodiment, the first security module 1 is configured for integration within a server 5, and is coupled to a transceiving unit 51 and a server memory unit 52 of the server 5. The second security module 2 is configured for integration within a client device 3' connected to the server 5 through network 100, and is coupled to a transceiving unit 35 and a memory unit 36 of the client device 3'.

The security system 20 of this embodiment is configured to implement a method similar to the method of the first preferred embodiment (see Figure 2) for securing the data stored in the server memory unit 52 of the server 5 and the data stored in the memory unit 36 of the client device 3'. Further, the security system 20 is configured to implement the method for also securing transmission data between the server 5 and the client device 3'. Referring to Figures 2 and 5, the method to be implemented using the security system 20 of this embodiment is described as follows.

In steps 501 to 511, the first and second security modules 1, 2 of the security system 20 are operable to verify each other. In this embodiment, the transceiving unit 51 of the server 5 and the transceiving unit 35 of the client device 3' are configured to send and to receive the data to be used during the verification, i.e. , the first public key, the encrypted second public key, and the encrypted first and second verification data.

When the verification between the first security module 1 and the second security module 2 is successfully completed, the first and second security modules 1, 2 of the security system 20 are operable to implement steps 512 to 514 to thereby obtain the first key and the second key. In this embodiment, the first security module 1 is configured to use the second key to secure not only the data stored in the server memory unit 52, but also the data transmitted from the server 5 to the client device 3' through the first security module 1. Similarly, the second security module 2 is configured to use the first key to secure not only the data stored in the memory unit 36, but also the data transmitted from the client device 3' to the server 5 through the second security module 2.

For example, when the server 5 needs to transmit data to the client device 3' , the first encryption/decryption unit 11 of the first security module 1 is operable to encrypt the data using the second key, and the transceiving unit 51 of the server 5 is subsequently operable to transmit the encrypted data to the client device 3' . Then, the second security module 2 receives the encrypted data through the transceiving unit 35 of the client device 3', and is operable to decrypt the encrypted data using the first key obtained in step 514. When the client device 3' needs to transmit data to the server 5, the second encryption/decryption unit 22 of the second security module 2 is operable to encrypt the data using the first key, and the transceiving unit 35 of the client device 3' is subsequently operable to transmit the encrypted data to the server 5. Then, the first security module 1 receives the encrypted data through the transceiving unit 51 of the server 5, and is operable to decrypt the encrypted data using the second key.

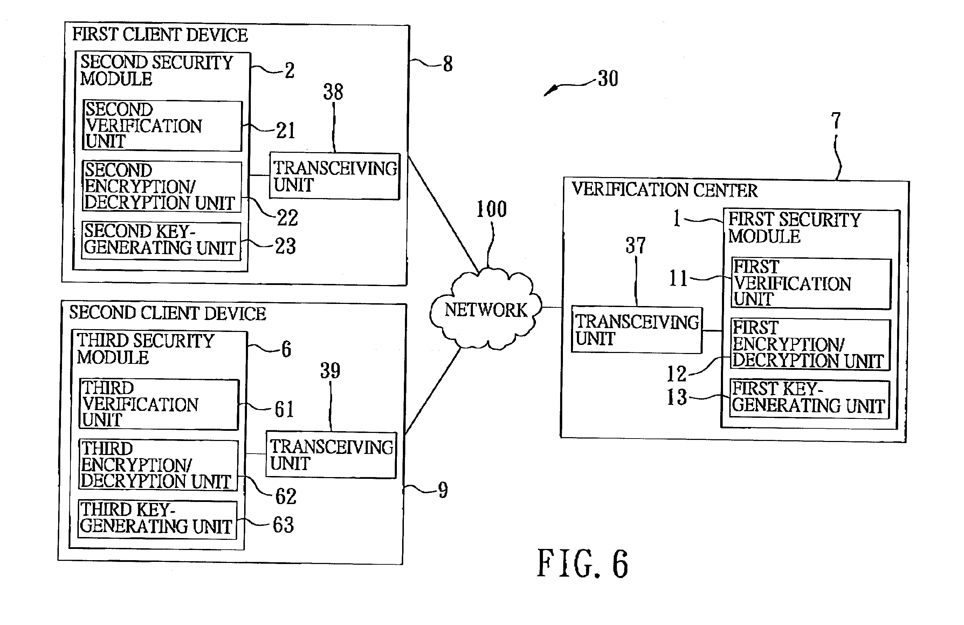

Referring to Figure 6, a third preferred embodiment of a security system 30 according to this invention includes a first security module 1 and a second security module 2 that are similar to the first preferred embodiment, and a third security module 6 that is associated with third verification data. The third security module 6 includes a third verification unit 61, a third encryption/decryption unit 62, and a third key-generating unit 63. In this embodiment, the first security module 1 is configured for integration within a verification center 7, and is coupled to a transceiving unit 37 of the verification center 7. The second security module 2 is configured for integration within a first client device 8 connected to the verification center 7 through network 100, and is coupled to a transceiving unit 38 of the first client device 8. The third security module 6 is configured for integration within a second client device 9 connected to the verification center 7 through the network 100, and is coupled to a transceiving unit 39 of the second client device 9.

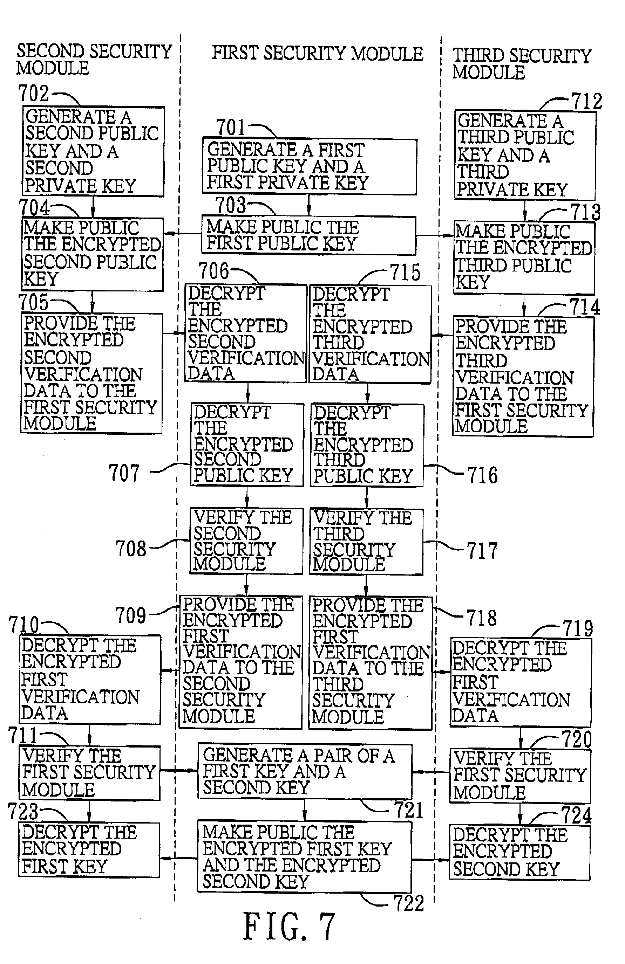

Referring to Figures 6 and 7, a method for securing transmission data between the first and second client device 8, 9 to be implemented by the security system 30 of the third preferred embodiment includes the following steps.

First, the first and second security modules 1, 2 of the security system 30 are operable to verify each other in steps 701 to 711 that are similar to steps 501 to 511 of the first preferred embodiment as shown in Figure 2. Moreover, the first and third security modules 1, 6 are also operable to verify each other in steps 701 and 703 and steps 712 to 720 that are also similar to steps 501 to 511 of the first preferred embodiment.

In step 712, the third key-generating unit 63 of the third security module 6 is operable to generate an accessible third public key and a third private key corresponding to the third public key. In steps 713 and 714, the third encryptzon/decryption unit 62 of the third security module 6 is operable to encrypt the third public key and the third verification data using the first public key, respectively. The encrypted third public key is made public in step 713, and the encrypted third verification data is provided to the first security module 1 in step 714.

In steps 715 to 718, operation of the first security module 1 is similar to steps 506 to 509 with the third verification data and the third public key instead of the second verification data and the second public key, respectively. When the first verification unit 11 of the first security module 1 successfully verifies the third security module 6 in step 717, the first security module 1 is operable, in step 718, to encrypt the first verification data using the third public key obtained in step 716 and to provide the encrypted first verification data to the third security module 6.

Then, the third security module 6 is operable to decrypt the encrypted first verification data using the third private key in step 719, and to verify the first security module 1 according to the first verification data in step 720.

When the verification between the first security module 1 in the verification center 7 and each of the second security module 2 in the first client device 8 and the third security module 6 in the second client device 9 is successfully completed, the first key-generating unit 13 of the first security module 1 is operable to generate a pair of a first key and a second key in step 721. Then, in step 722, the first encryption/decryption unit 12 of the first security module 1 is operable to encrypt the first key using the second public key and to encrypt the second key using the third public key. The encrypted first key and the encrypted second key are made public.

In step 723, the second encryption/decryption unit 22 of the second security module 2 is operable to decrypt the encrypted first key using the second private key to thereby obtain the first key. In step 724, the third encryption/decryption unit 62 of the third security module 6 is operable to decrypt the encrypted second key using the third private key to thereby obtain the second key.

When the first client device 8 needs to transmit data to the second client device 9, the second encryption/decryption unit 22 of the second security module 1 is operable to encrypt the data using the first key, and the transceiving unit 3B of the first client device 8 is subsequently operable to transmit the encrypted data to the second client device 9 through the network 100. Then, the third security module 6 receives the encrypted data through the transceiving unit 39 of the second client device 9, and is operable to decrypt the encrypted data using the second key. On the other hand, when the second client device 9 needs to transmit data to the first client device 8, the third encryption/decryption unit 62 of the third security module 6 is operable to encrypt the data using the second key, and the transceiving unit 39 of the second client device 9 is subsequently operable to transmit the encrypted data to the first client device 8. Then, the second security module 2 receives the encrypted data through the transceiving unit 38 of the first client device 8, and is operable to decrypt the encrypted data using the first key.

In summary, since the transmitted data is encrypted using one of the first and second keys, the encrypted data cannot be decrypted without the other one of the first and second keys when the encrypted data is stolen. As a result, the stolen encrypted data is useless. Therefore, the method for securing transmission data of this invention provides multiple protections to the second public key, the first and second keys, and the data stored in the memory unit 31, 52, 36. Any data stolen from an unauthorized channel cannot be used for any other purpose. Thus, security and safety of the data are certainly enhanced.

## Claims

1. A method for securing transmission data to be implemented by a security system (10, 20, 30) that includes a first security module (1) associated with first verification data and a second security module (2) associated with second verification data, the first security module (1) including a first public key and a first private key corresponding to the first public key, the second security module (2) including a second public key and a second private key corresponding to the second public key, said method being **characterized by** the steps of:
a) configuring the first security module (1) to provide the first public key to the second security module (2);
b) configuring the second security module (2) to encrypt the second public key using the first public key, and to provide the encrypted second public key to the first security module (1);
c) configuring the second security module (2) to encrypt the second verification data associated therewith using the first public key received in step a), and to provide the encrypted second verification data to the first security module (1);
d) configuring the first security module (1) to decrypt the encrypted second public key received in step b) using the first private key, to thereby obtain the second public key;
e) configuring the first security module (1) to encrypt the first verification data associated therewith using the second public key obtained in step d) , and to provide the encrypted first verification data to the second security module (2);
f) configuring the first security module (1) and the second security module (2) to verify each other using the encrypted second verification data and the encrypted first verification data received in steps c) and e), respectively; and
g) configuring the security system (10, 20, 30) to allow data transmission through the first security module (1) and the second security module (2) when verification is successfully completed in step f).

2. The method as claimed in Claim 1, further **characterized by** the steps, prior to step a), of:
configuring the first security module (1) to generate an identification code corresponding to the second security module (2), and to provide the identification code to the second security module (2); and
configuring the security system (10, 20, 30) to implement steps a) to g) after the second security module (2) successfully completes a login procedure for gaining access to the security system (10, 20, 30) using the identification code.

3. The method as claimed in any one of Claims 1 and 2, further **characterized in that** step f) includes the following sub-steps of:
f1) configuring the first security module (1) to decrypt the encrypted second verification data received in step c) using the first private key to thereby obtain the second verification data, and to verify the second security module (2) using the second verification data thus obtained; and
f2) configuring the second security module (2) to decrypt the encrypted first verification data received in step e) using the second private key to thereby obtain the first verification data, and to verify the first security module (1) using the first verification data thus obtained.

4. The method as claimed in any one of Claims 1 to 3, further **characterized by** the following the steps, prior to step g), of:
i) configuring the first security module (1) to generate a first key and a second key each of which is used for encrypting data and for decrypting encrypted data that is encrypted using the other one of the first and second keys; and
ii) configuring the first security module (1) to encrypt the first key using the second public key obtained in step d) , and to provide the encrypted first key to the second security module (2),

5. The method as claimed in Claim 4, further **characterized in that** step g) includes the following sub-steps of:
g1) configuring the first security module (1) to encrypt data that is to be transmitted using the second key, and to transmit the encrypted data to the second security module (2); and
g2) configuring the second security module (2) to decrypt the encrypted first key received in step ii) using the second private key to thereby obtain the first key, and to decrypt the encrypted data received in sub-step g1) using the first key thus obtained.

6. The method as claimed in Claim 4, further **characterized in that** step g) includes the following sub-steps of:
g3) configuring the second security module (2) to decrypt the encrypted first key received in step ii) using the second private key to thereby obtain the first key;
g4) configuring the second security module (2) to encrypt data that is to be transmitted using the first key thus obtained, and to transmit the encrypted data to the first security module (1); and
g5) configuring the first security module (1) to decrypt the encrypted data received in sub-step g4) using the second key.

7. The method as claimed in Claim 4, the security system (30) further including a third security module (6) that is associated with third verification data and that includes a third public key and a third private key corresponding to the third public key,
said method further **characterized by** the step of configuring the security system (30) to implement steps a) to g) with the third security module (6), the third verification data, the third public key and the third private key instead of the second security module (2) , the second verification data, the second public key and the second private key, respectively, such that data transmission through the second security module (2) and the third security module (6) is allowed in step g) when the first and second security modules (1, 2) have successfully verified each other and when the first and third security modules (1, 6) have successfully verified each other.

8. The method as claimed in Claim 7, further **characterized in that**, in step ii), the first security module (1) is further configured to encrypt the second key using the third public key obtained in step d), and to provide the encrypted second key to the third security module (6).

9. The method as claimed in Claim 8, further **characterized in that** step g) includes the following sub-steps of:
g6) configuring the second security module (2) to decrypt the encrypted first key received in step ii) using the second private key to thereby obtain the first key;
g7) configuring the second security module (2) to encrypt data that is to be transmitted using the first key thus obtained, and to transmit the encrypted data to the third security module (6); and
g8) configuring the third security module (6) to decrypt the encrypted second key received in step ii) using the third private key to thereby obtain the second key, and to decrypt the encrypted data received in sub-step g7) using the second key thus obtained.

10. The method as claimed in Claim 8, further **characterized in that** step g) includes the following sub-steps of:
g9) configuring the third security module (6) to decrypt the encrypted second key received in step ii) using the third private key to thereby obtain the second key;
g10) configuring the third security module (6) to encrypt data that is to be transmitted using the second key thus obtained, and to transmit the encrypted data to the second security module (2); and
g11) configuring the second security module (2) to decrypt the encrypted first key received in step ii) using the second private key to thereby obtain the first key, and to decrypt the encrypted data received in sub-step g10) using the first key thus obtained.

11. A security system (10, 20, 30) for securing transmission data, said security system (10, 20, 30) being **characterized by**:
a first security module (1) that is associated with first verification data, and that includes a first encryption/decryption unit (12), a first verification unit (11), and a first key-generating unit (13) for generating an accessible first public key and a first private key corresponding to the first public key; and
a second security module (2) that is associated with second verification data, that is configured to obtain the first public key from said first security module (1), and that includes a second encryption/decryption unit (22), a second verification unit (21), and a second key-generating unit (23) for generating a second public key and a second private key corresponding to the second public key;
said second encryption/decryption unit (22) being operable to encrypt the second public key and the second verification data using the first public key, and to provide the encrypted secondpublic key and the encrypted second verification data to said first security module (1) ;
said first encryption/decryption unit (12) being operable to decrypt the encrypted second public key and the encrypted second verification data using the first private key to thereby obtain the second public key and the second verification data, to encrypt the first verification data using the second public key thus obtained, and to provide the encrypted first verification data to said second security module (2);
said first verification unit (11) being operable to verify said second security module (2) based upon the second verification data decrypted and obtained by said first encryption/decryption unit (12);
said second encryption/decryption unit (22) being further operable to decrypt the encrypted first verification data using the second private key to obtain the first verification data;
said second verification unit (21) being operable to verify said first security module (1) based upon the first verification data decrypted and obtained by said second encryption/decryption unit (22);
said security system (10, 20, 30) being operable to allow data transmission through said first security module and said second securitymodule when verification between said first security module and said second security module is successfully completed.

12. The security system (10, 20, 30) as claimed in Claim 11, further **characterized in that**:
said first securitymodule (1) is operable to generate an identification code corresponding to said second security module (2), and to provide the identification code to said second security module (2); and
said second securitymodule (2) is operable only after a login procedure for gaining access to said security system (10, 20, 30) using the identification code received from said first security module (1) is successfully completed by said second security module (2).

13. The security system (10, 20, 30) as claimed in any one of Claims 11 and 12, further **characterized in that**, after said first and second security modules (1, 2) have successfully verified each other,
said first key-generating unit (13) of said first security module (1) is operable to further generate a first key and a second key each of which is used for encrypting data and for decrypting encrypted data that is encrypted using the other one of the first and second keys;
said first encryption/decryption unit (12) of said first security module (1) is further operable to encrypt the first key using the second public key, and to provide the encrypted first key to said second security module (20;
said second encryption/decryption unit (22) of said secondsecuritymodule (2) is further operable to decrypt the encrypted first key using the second private key to thereby obtain the first key;
said first encryption/decryption unit (12) is further operable to encrypt data that is to be transmitted using the second key and to transmit the encrypted data to said second security module (2), and said second encryption/decryption unit (22) is further operable to decrypt the encrypted data from said first security module (1) using the first key thus obtained; and
said second encryption/decryption unit (22) is further operable to encrypt data that is to be transmitted using the first key thus obtained and to transmit the encrypted data to said first security module (1), and said first encryption/decryption unit (12) is further operable to decrypt the encrypted data from said second security module (2) using the second key.

14. The security system (10, 20, 30) as claimed in any one of Claims 11 to 13, further **characterized in that** said first securitymodule (1) is configured for hardware integration within a computer (3) having an operating system and an application program, and the first private key generated by said first key-generating unit (13) is inaccessible to the operating system and the application program of the computer (3).

15. The security system (10, 20, 30) as claimed in Claim 14, further **characterized in that**:
said first verification unit (11) of said first security module (1) is further operable to dynamically generate the first verification data, and the first verification data thus generated is inaccessible to the operating system and the application program of the computer (3);
said second security module (2) is an application program stored in a memory device (31) of the computer (3) electrically connected to said first securitymodule (1), and is configured for implementation by a processor (32) of the computer (3); and
said second verification unit (21) of said second security module (2) is further operable to generate the second verification data according to a verification rule dynamically generated by said first verification unit (11) of said first security module (1).
